# EUROPÄISCHE PATENTSCHRIFT

(11) **EP 2 610 026 B1**
(45) Veröffentlichungstag und Bekanntmachung des Hinweises auf die Patenterteilung: **18.11.2015**
(21) Anmeldenummer: 12197230.1
(22) Anmeldetag: 14.12.2012
(51) Int. Cl.: B23H 7/06, B23D 57/00

(54) **Drahtschneideverfahren**
Wire cutting method
Procédé de coupe à fil

(30) Priorität: 30.12.2011 CH 20612011
(43) Veröffentlichungstag der Anmeldung: 03.07.2013
(73) Patentinhaber: Agie Charmilles SA, 6616 Losone (CH)
(72) Erfinder: Baumeler, Marco, 6678 Lodano (CH)
(74) Vertreter: De Colle, Piergiacomo

(56) Entgegenhaltungen:
- EP-A1- 2 213 400
- EP-A2- 2 295 180
- DE-A1- 3 940 691
- US-A1- 2003 145 707

## Beschreibung

Die vorliegende Erfindung betrifft ein Verfahren für das Schneiden mit einem ablaufenden Draht.

Drahterodiermaschinen dienen der Fertigung von Schnittmatrizen, Stempel, Elektroden, Extrudierwerkzeuge, aber auch zur Fertigung von kleinen bis mittleren Serien und häufig im Prototypenbau.

Bei optimalen Bedingungen erreichen moderne Drahterodiermaschinen (WEDM) Schrittraten von 500mm²/min in Kaltarbeitsstahl. Die Schrittrate ist unter anderem von der Werkstückhöhe abhängig. Diesbezüglich wird auf die Firmenschrift "Experience" No. 23, Id. 027.158, der Firma Agie SA, veröffentlicht im Oktober 2003 hingewiesen. Dieser Veröffentlichung ist, auf der letzten Seite (Rückenblatt), eine qualitative Darstellung der Schrittrate über die Werkstückhöhe zu entnehmen. Diese etwas vereinfachte Grafik beginnt bei der Werkstückhöhe von 20mm, lässt aber erahnen, dass die Schnittrate mit niedriger Werkstückhöhe steil abfällt. Die Darstellung der Schrittrate zeigt bei einer Werkstückhöhe von ungefähr 50mm ein Maximum. Im mittleren Werkstückhöhenbereich, von etwa 30 bis 100mm, ist die Schrittrate recht nah beim Maximum. Mit grösserer Werkstückhöhe fällt die Schnittrate wieder.

Bei WEDM wird das Dielektrikum zur Abführung der abgetragenen Partikel mit hohem Druck in den Schnittspalt gespritzt, und zwar wahlweise über den unteren Drahtführungskopf, dem oberen Drahtführungskopf oder beiden. Die Breite des Schnittspaltes entspricht dem Drahtdurchmesser plus der zweifachen Funkenspaltweite plus Drahtschwingung, also etwa 0.05 bis 0.5mm. Die Spülflüssigkeit wird unmittelbar in den Schnittspalt geführt doch bei grösserer Werkstückhöhe ist der Druckverlust zu spüren. Je höher das Werkstück, desto schwieriger die Spülbedingungen.

Bei sehr kleinen Werkstückhöhen sind die Bedingungen gerade umgekehrt. Die Spaltspülung ist sehr gut. Die Verunreinigung des Funkenspalts ist vergleichsweise gering, was jedoch für einen stabilen Prozess eher hinderlich ist.

Besonders bedeutsam ist o.g. Charakteristik bei schwach leitenden Werkstoffen. Bei kleinen bis mittleren Werkstückhöhen ist eine verhältnismässig gute Schnittrate zu erzielen. Bei relativ grosser Werkstückhöhe kommt man hingegen nur sehr langsam vorwärts.

Hier will die vorliegende Erfindung Abhilfe schaffen. Die Aufgabe wird erfindungsgemäss dadurch gelöst, dass die Drahtelektrode in Schnittrichtung geneigt wird, so dass die Werkstückhöhe in mindestens zwei Teilbereiche geteilt wird.

Die Erfindung betrifft ein Verfahren und eine Vorrichtung für das Schneiden mittels eines oder mehreren ablaufenden Drähte, insbesondere das funkenerosive-, elektrochemische-, oder abrasive Schneiden oder ein Mischprozess bei welchem der eine oder die mehreren Drähte abwechselnd in mindestens zwei unterschiedliche bestimmte Winkellagen in Schnittrichtung geneigt wird/werden wodurch die effektive Schnitthöhe am Werkstück kleiner als die gesamte Werkstückhöhe wird.

Aus dem Stand der Technik sind bereits einige Verfahren bekannt, bei denen ein Draht in Schnittrichtung geneigt wird. Die EP2213400 beschreibt ein Verfahren für das funkenerosive schneiden (WEDM) bei welchem die Drahtelektrode in Abhängigkeit der jeweiligen Konturkrümmung in Schnittrichtung geneigt wird, um der Rillenbildung entgegenzutreten und eine feinere Oberfläche zu erzeugen. Die Drahtelektrode wird dabei langsam und progressiv geneigt, bis die zulässige Schrägstellung erreicht ist, und danach wieder langsam gerade gestellt, um Unstetigkeiten zu vermeiden. Ziel dieser Schrift ist also die Verbesserung des Arbeitsergebnisses. JP6-143037 beschreibt ein Verfahren für das funkenerosive schneiden (WEDM), bei welchem die Drahtelektrode beim Anschnitt in Schnittrichtung geneigt wird um möglichst rasch einen Schnittspalt zu bilden und damit eine Drahtelektrodenschwingung zu unterdrücken. Die Drahtelektrode wird im Schnittspalt langsam und progressiv geradegestellt, um Unstetigkeiten vorzubeugen. Ziel dieser Schrift ist also die Stabilisierung des Prozesses in der Anschnittphase.

Die EP 2 295 180 A2, die als nächstliegender Stand der Technik angesehen werden kann, offenbart ebenfalls ein Verfahren bei welchem der Draht in Schnittrichtung geneigt wird um Geometriefehler oder Rillenbildungen entgegenzutreten. Hierbei wird der Abstand zwischen Drahtelektrode und Werkstück z.B. um 0.1 mm verändert.

Das primäre Ziel der vorliegenden Erfindung ist hingegen die Erzielung einer höheren Schnittrate und somit einer höhere Produktivität der Anlage.

Die Erfindung wird nunmehr anhand der Figuren ausführlich dargelegt. Die Figuren zeigen:
- Figur 1.: Eine Grafik der Schrittrate in Abhängigkeit der Werkstückhöhe am Beispiel einer Drahterodiermaschine;
- Figur 2.: Die übliche Achsenbezeichnung bei Drahterodiermaschinen;
- Figur 3a,b: Eine Darstellung der Einstellung der Winkellage des Drahtes in einem Schneidverfahren gemäss der Erfindung bei einer Schneidmaschine mit reversierender Drahtlaufrichtung;
- Figur 4a-c: Die Darstellung möglicher Sequenzen zur Einstellung der Winkellage des Drahtes in einem Schneidverfahren gemäss der Erfindung;
- Figur 5a-c: Die grafische Darstellung der Winkellage in Funktion der Zeit bei Einstellung der jeweiligen Drahtneigungssequenz gemäss Figur 4a bis 4c;
- Figur 6a-d: Die Darstellung der Schnittebene eines Werkstücks bei der Einstellung der Winkellage des Drahtes gemäss den Figuren 4a-c;
- Figur 7a-c: Die grafische Darstellung der Winkellage (7a), bzw. der Drahtlaufrichtung (7b), bzw. der Einschaltung eines Impulsgenerators in Funktion der Zeit bei einer Maschine mit reversierender Drahtlaufrichtung;
- Figur 8: Die Darstellung der Schnittebene eines Werkstücks bei einem bekannten Verfahren zur Verbesserung der Oberflächenqualität;

Wie oben erwähnt betrifft die Erfindung ein Verfahren für das Schneiden mittels zumindest einem ablaufenden Draht 1 der abwechselnd in mindestens zwei unterschiedliche bestimmte Winkellagen in Schnittrichtung r geneigt wird. Die effektive Schnitthöhe s ist somit kleiner als die gesamte Werkstückhöhe h, bzw. kleiner als die Schnitthöhe die beim Schneiden mit einer einzigen bestimmten Winkellage des Drahtes vorliegt (d.h. ohne periodischer Einstellung einer zweiten Winkellagen in Schnittrichtung).

Es wird beispielsweise periodisch zwischen einer ersten und einer zweiten bestimmten Winkellage umgeschaltet, wobei der Draht 1 jeweils in Schnittrichtung geneigt wird. Die Bearbeitung in den beiden bestimmten Winkellagen des Drahtes 1 werden vorzugsweise über die selbe Zeitdauer eingestellt. Auf diese Weise ist der ablaufende Draht 1 nicht über die gesamte Werkstückhöhe im Eingriff sondern im Durchschnitt nur über die halbe Werkstückhöhe. Die Evakuierung der abgetragenen Partikel wird erheblich erleichtert und die Schnittrate verbessert, insbesondere bei hohen Werkstücken. Das genannte Schneidverfahren ist ein funkenerosives-, elektrochemisches- oder abrasives Schneidverfahren oder ein Hybrid-Schneidverfahren.

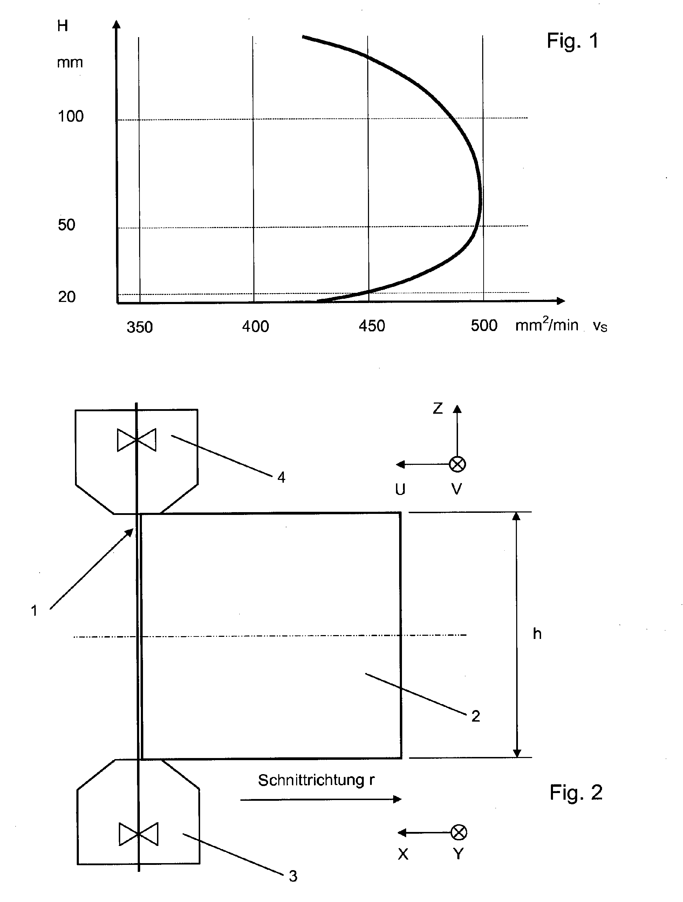

Das Diagramm in Figur 1 zeigt die Schnittrate in Funktion der Werkstückhöhe bei einer Drahterodiermaschine nach aktuellem Stand der Technik in einer qualitativen Darstellung, wie Sie beispielsweise aus der Eingangs erwähnten Firmenschrift "Experience" zu entnehmen ist.
Die Schnittrate erreicht bei einer Höhe von etwa 60mm das Maximum, bei 150mm ist diese bereits rund 20% unter dem Maximum und fällt dann sehr stark. Werkstücke mit sehr hohem elektrischem Widerstand sind bei grösserer Höhe kaum zu bearbeiten. Die Erfindung bietet also eine Lösung zur Erhöhung der Schnittrate für hohe Werkstücke, aber auch ein Verfahren zum schneiden von Werkstoffe mit hohem elektrischem Widerstand.

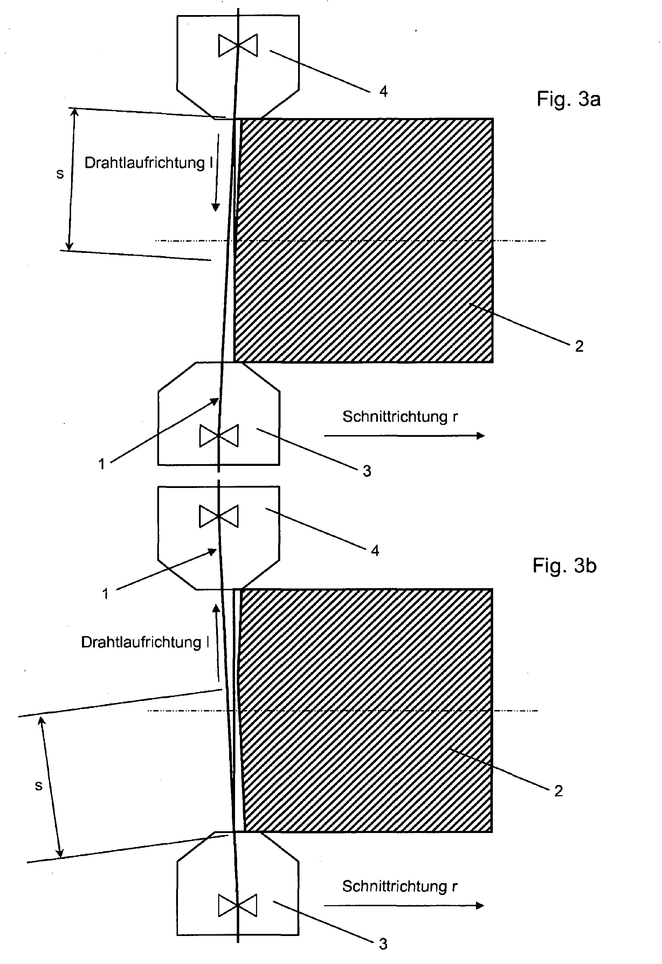

Der ablaufende Draht 1 wird - siehe Figuren 3a, 3b - wie gesagt abwechselnd in mindestens zwei unterschiedliche bestimmte Winkellagen in Schnittrichtung r geneigt. Dies geschieht vorzugsweise durch relative Verschiebung der oberen Drahtführung 4 gegenüber der unteren Drahtführung 3. Eine Drahterodiermaschine verfügt beispielsweise regelmässig über X/Y-Achsen, U/V-Achsen und eine Z-Achse welche eine Verstellung der oberen Drahtführung 4 gegenüber der unteren Drahtführung 3 ermöglichen. Beispielsweise wird die oberen Drahtführung 4 während einer ersten Zeitdauer in Schnittrichtung gegenüber der unteren Drahtführung 3 nach vorne versetzt, wodurch der Draht 1 in eine erste bestimmte Winkellage gestellt wird; während einer zweiten Zeitdauer wird die oberen Drahtführung 4 gegenüber der unteren Drahtführung 3 zurückversetzt, wodurch der Draht 1 in eine zweite bestimmte Winkellage gestellt wird. Jede bestimmte Winkellage wird während einer bestimmten Zeitdauer eingestellt, sodass das Werkstück 2 in der jeweiligen Winkellage bearbeitet werden kann. Diese Prozedur wiederholt sich beliebig, wobei die zwei unterschiedlichen Winkellagen jeweils alternierend eingestellt werden. Zur Einstellung der relativen Position des Werkzeuges gegenüber dem Werkstück 2 ist gegebenenfalls auch die X- und/oder Y-Achse beteiligt.

Zur Durchführung des Verfahrens muss die relative Winkellage zwischen Draht und Werkstück veränderbar sein. In einer weiteren Ausführungsform erfolgt die Einstellung der mindestens zwei unterschiedlichen Winkellagen am Werkstück, wobei das Werkstück um eine Achse normal zu der durch Drahtlaufrichtung und Schnittrichtung definierten Ebene verschwenkt wird. Das Werkstück ist beispielsweise auf einer handelsüblichen Rotationssachse aufgespannt, und wird alternierend in zumindest zwei unterschiedliche bestimmte Winkellagen gegenüber dem mindestens einen Draht gebracht.
Die hier beschriebene Ausführungsform mit einer Rotationsachse ist vorzüglich für die Verschwenkung des Wekstückes in einer einzigen Rotationsrichtung geeignet. Dies kann sich Anlagetechnisch als vorteilhaft erweisen, insbesondere wenn mehrere Drähte gleichzeitig im Eingriff stehen, wenn mehrere Drahtabschnitte desselben Drahtes parallel an das Werkstück herangeführt werden und dass das Werkstück gleichzeitig an mehreren Stellen bearbeitet wird und/oder wenn die Bearbeitung eine einzige Schnittrichtung umfasst. Insbesondere bei dedizierten Anlagen ist die Einrichtung zur Verschwenkung des Werkstücks vorzugsweise auf die speziellen Bearbeitungsaufgaben abgestimmt. Insofern kann die Einrichtung zur Verschwenkung des Werkstücks auch speziell ausgebildet sein, z.B. als zweiseitig gelagerte Schwenkgondel für kleine Schwenkwinkel.

Eine weitere Ausführungsform bzw. Möglichkeit für die Einstellung unterschiedlicher Winkellagen am Werkstück ist ein schwenkbarer Arbeitstisch, beispielsweise ein Arbeitstisch mit Parallelkinematik gemäss "Design of hybrid-kinematic mechanism for machine tool" nach Patric Pham, These EPFL 4314, Seite 130 (http://dx.doi.org/10.5075/epfl-thesis-4314).

Vorzugsweise werden relativ kleine Winkellagen eingestellt, beispielsweise von +/- 2°, sodass ansonst Schnittbedingungen ähnlich wie beim sog. zylindrischen Schnitt, d.h. bei senkrecht durchlaufendem Draht. Dadurch ist lediglich eine kleine Achsverschiebung (X/Y/U/V) zur Einstellung der unterschiedlichen Winkellagen durchzuführen.

Hierbei wird der Prozess zur Umstellung der Winkellage kurzzeitig unterbrochen, z.B. durch Generatorabschaltung, oder zumindest werden die Prozessparameter kurzzeitig reduziert. Dieser Unterbruch oder Reduktion ist jedoch auf einige 100ms begrenzt.

Nebst den Eingangs erwähnten Drahterodiermaschinen (WEDM) sind sogenannte Fastwire Maschinen bekannt (Fastwire Maschinen werden auch als FW-Maschinen oder HS-WEDM bezeichnet; siehe auch http://blueline.gfac.com/index.php?id=14942&L=0). Im Gegensatz zur vorgenannten WEDM-Maschinen ist die Drahtlaufrichtung bei FW-Maschinen reversierend, d.h. die Drahtelektrode läuft abwechslungsweise in eine Richtung und danach in entgegengesetzter Richtung. Es wird immer wieder dieselbe Drahtelektrode eingesetzt. Die Drahtelektrode, typischerweise ein Molybdändraht läuft mit hoher Geschwindigkeit ab, und sorgt durch Mitnahme für den Austausch der Spülflüssigkeit im Schnittspalt. Der Materialabtrag erfolgt in einem elektrochemisch-/ elektrothermischen Mischprozess. FW-Maschinen sind insbesondere in Asien stark verbreitet, da die Anschaffungs- und Unterhaltskosten sehr niedrig sind. In den traditionellen Industrieländer finden FW-Maschinen bislang fast keinen Absatz, hauptsächlich weil der Automatisierungsgrad sehr tief ist und weil diese leistungsmässig nicht mit jenen der wesentlich teureren WEDM-Maschinen mithalten können.
Die nachfolgende Beschreibung bezieht sich im Wesentlichen auf WEDM und FW, was jedoch nicht einschränkend zu verstehen ist.

Die Erfindung ist in Zusammenhang mit FW-Maschinen besonders vorteilhaft einsetzbar. Da bei FW-Maschinen ohnehin periodisch eine Prozesspause zur Umkehrung der Drahtlaufrichtung erforderlich ist, wird vorzugsweise gleichzeitig die relative Winkellage des Drahtes zum Werkstück in Schnittrichtung geändert. Die FW-Maschine verfügt typischerweise über einen Drahtvorrat von etwa 600m. Die Drahtlaufgeschwindigkeit beträgt etwa 10m/s, so dass die Drahtlaufrichtung nach rund 60s umkehrt. Bei einer Werkstückhöhe von 100mm und einer typischen Schnittrate von 100mm²/min beträgt die Schnittgeschwindigkeit also etwa 1mm/min. Somit wird in jeder Drahtlaufrichtung jeweils rund 1 mm des 100mm hohen Werkstücks geschnitten.

Vorzugsweise sind FW-Drahtlaufrichtung und Winkellage des Drahtes in Schnittrichtung so aufeinander abgestimmt, dass der Draht bei Eintritt in den Schnittspalt unmittelbar auf die zu bearbeitende Teilhöhe des Werkstücks trifft. Ist also beispielsweise wie in Figur 3a dargestellt gerade die obere Drahtführung 4 gegenüber der unteren Drahtführung 3 in Schnittrichtung nach vorne versetzt, so soll die Drahtlaufrichtung I derart eingestellt sein, dass der Draht 1 von oben zum Werkstück 2 läuft. Ist hingegen wie in Figur 3b dargestellt gerade die untere Drahtführung 3 gegenüber der oberen Drahtführung 4 in Schnittrichtung nach vorne versetzt, so soll die Drahtlaufrichtung I derart eingestellt sein, dass der Draht 1 von unten zum Werkstück 2 läuft. Auf diese Weise gelingt die saubere Spülflüssigkeit eher an die Wirkstelle im Schnittspalt. Diese Massnahme kann auch bei anderen Drahtschneidverfahren mit reversierender Drahtaufrichtung eingesetzt werden, zum Beispiel einem Abrasiv-Schneidverfahren mit losem Abrasivkorn (slurry).

Voraussetzung für die Anwendung des erfindungsgemässen Verfahrens mit einer FW ist auch hier, dass der Draht abwechselnd in mindestens zwei unterschiedliche Winkellagen geneigt werden kann. Zur Einstellung der mindestens zwei unterschiedlichen Winkellagen des Drahtes und/oder des Werkstücks können ebenfalls die zuvor beschriebenen Schwenkeinrichtungen verwendet werden. Bei Schneidmaschinen ohne U/V-Achsen genügt in der einfachsten Form eine Einrichtung zur Verstellung einer Drahtführung um einen festen Betrag. Damit können bereits die mindestens zwei unterschiedlichen bestimmten Winkellagen eingestellt werden, nämlich einerseits die senkrechte Drahtlaufrichtung (erste Winkellage) und andererseits eine durch Versatz einer Drahtführung sich ergebende zweite Winkellage.

Die Erfindung kommt vorzugsweise in geraden Konturabschnitten zum Einsatz, weil die Drahtneigung in Schnittrichtung in gekrümmten Konturabschnitten (Radien und Ecken) bekanntlich zu einem Konturfehler führt. Der Konturfehler hängt von der momentanen Konturkrümmung, vom Neigungswinkel des Drahtes und von der Werkstückhöhe ab. Es gelten dieselben Zusammenhänge und Randbedingungen die im Eingangs erwähnten Stand der Technik (EP2223400) ausgiebig erläutert sind. Wenn ein bestimmter Konturfehler toleriert wird, so kann das erfindungsgemässe Verfahren also auch im Bereich leicht gekrümmter Konturen eingesetzt werden.

Zur Umstellung der bestimmten Winkellagen wird eine Prozesspause eingeführt. Während dieser Prozesspause findet kein Materialabtrag statt. Die Umstellung zwischen den bestimmten Winkellagen soll deshalb zügig erfolgen. Das periodische Umschalten von einer Winkellage zur anderen erfolgt vorzugsweise mit der maximalen Positioniergeschwindigkeit; der Draht soll die jeweilige Zielposition jedoch ohne Überschwingen erreichen. Deshalb wird der Draht nach einer Pause zur Umschaltung der relativen Winkellage des Drahtes zum Werkstück vorzugsweise nicht unmittelbar auf die Zielposition zur Wiederaufnahme der Bearbeitung gefahren, sondern auf eine Anfahrposition, die beispielsweise 5 bis 500µm, typischerweise 50µm vor der Zielposition liegt. Die Endposition, d.h. die Position des Werkstücks und/oder des Drahtes vor einer Pause zur Umkehrung der relativen Winkellage des Drahtes zum Werkstück wird im Hinblick auf die folgende Bearbeitung bei derselben relativen Winkellage gespeichert. Die Zielposition zur Wiederaufnahme der Bearbeitung entspricht der Endposition des Drahtes am Ende der vorangehenden Schneidperiode bei derselben Winkellage. Die neue Zielposition des Werkstücks und/oder des Drahtes zur Wiederaufnahme der Bearbeitung nach einer Pause zur Umstellung der relativen Winkellage des Drahtes zum Werkstück ist durch die gespeicherte Endposition des Werkstücks und/oder des Drahtes in einer vorangehenden Bearbeitungsphase bei der selben relativen Winkellage bestimmt.
Ab der Anfahrposition fährt der Draht vorzugsweise mit reduzierter Geschwindigkeit zur Zielposition; im Falle einer drahterosiven Bearbeitung vorzugsweise mit der maximalen prozessgesteuerter Geschwindigkeit.

Erfindungsgemäss wird der Draht vorzugsweise in zwei unterschiedlichen Winkellagen in Schnittrichtung geneigt; das erfindungsgemässe Verfahren kann jedoch auch mit drei und mehr unterschiedlichen bestimmten Winkellagen verwirklicht werden. Auf diese Weise kann die durchschnittliche effektive Schnitthöhe der Anzahl unterschiedlicher Winkellagen entsprechend geteilt werden.
Vorzugsweise wird der Draht bzw. das Werkstück abwechselnd in zwei unterschiedliche bestimmte Winkellagen in Schnittrichtung geneigt, wobei der Betrag des Neigungswinkels der beiden Winkellagen gegenüber dem Werkstück bzw. der senkrechten Drahtlaufrichtung gleich ist und die Neigungsrichtungen entgegengesetzt sind. Beispielsweise wird der Draht oder das Werkstück einmal vorwärts in Schnittrichtung und einmal rückwärts in Schnittrichtung geneigt, beispielsweise um denselben Betrag.

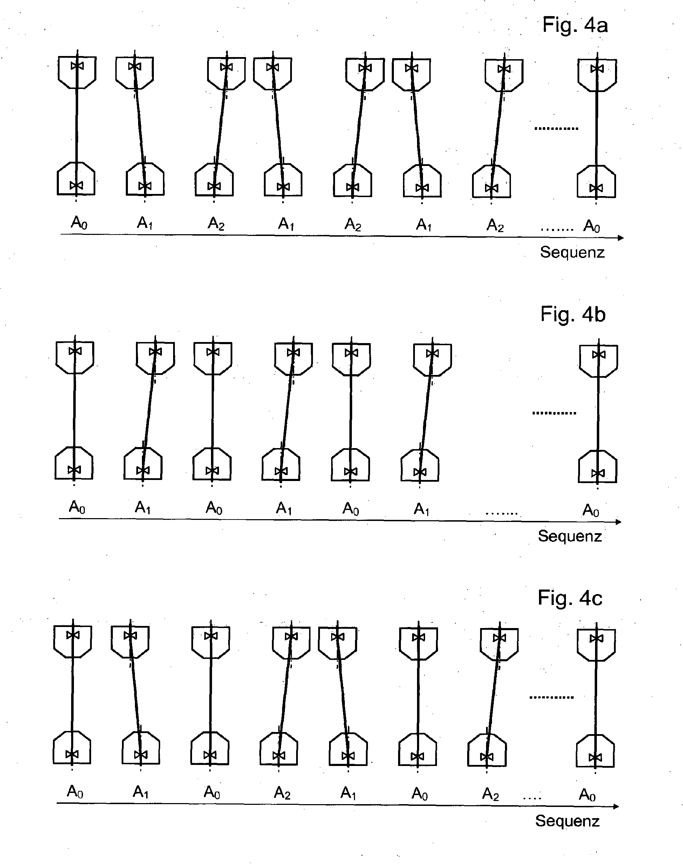

Die Figuren 4a bis 4c zeigen eine nicht abschliessende Auswahl von möglichen Drahtneigungssequenzen. Vorzugsweise beginnt und/oder endet das Schneidverfahren in der vertikalen Drahtlaufrichtung, wobei zwischen Anfang und Ende abwechslungsweise die mindestens zwei unterschiedlichen bestimmten Winkellagen eingestellt werden. Durch Geradestellung des Drahtes am Anfang und Ende eines geraden Konturabschnittes können Ecken und Radien ohne Konturfehler erzeugt werden.
Figur 4a zeigt eine Drahtneigungssequenz bei der sich der Draht vorerst in der vertikalen Ausgangslage A₀ befindet; dann wird abwechselnd eine erste Winkellage A₁ in Schnittrichtung und eine zweite Winkellage A₂ in Schnittrichtung eingestellt; die Winkellagen A₁ und A₂ werden bis zum Ende der Bearbeitung oder des Konturabschnittes abwechslungsweise eingestellt. Schliesslich wird wieder die vertikale Drahtlaufrichtung A₀ eingestellt.
Das Schneidverfahren beginnt vorzugsweise aus einer der zumindest zwei bestimmten Winkellagen, d.h. die Ausgangslage entspricht einer der zumindest zwei bestimmten Winkellagen. Figur 4b zeigt eine Drahtneigungssequenz mit zwei bestimmten Winkellagen, bei der sich der Draht vorerst in der vertikalen Lage befindet; die vertikalen Drahtlaufrichtung A₀ ist hier eine der zwei einzustellenden Winkellagen; es wird abwechselnd die erste bestimmte Winkellage A₀ in Schnittrichtung und eine zweite bestimmte Winkellage A₁ in Schnittrichtung eingestellt.
Figur 4c zeigt eine weitere Drahtneigungssequenz, bei welcher abwechslungsweise drei unterschiedliche bestimmte Winkellagen in Schnittrichtung eingestellt werden.

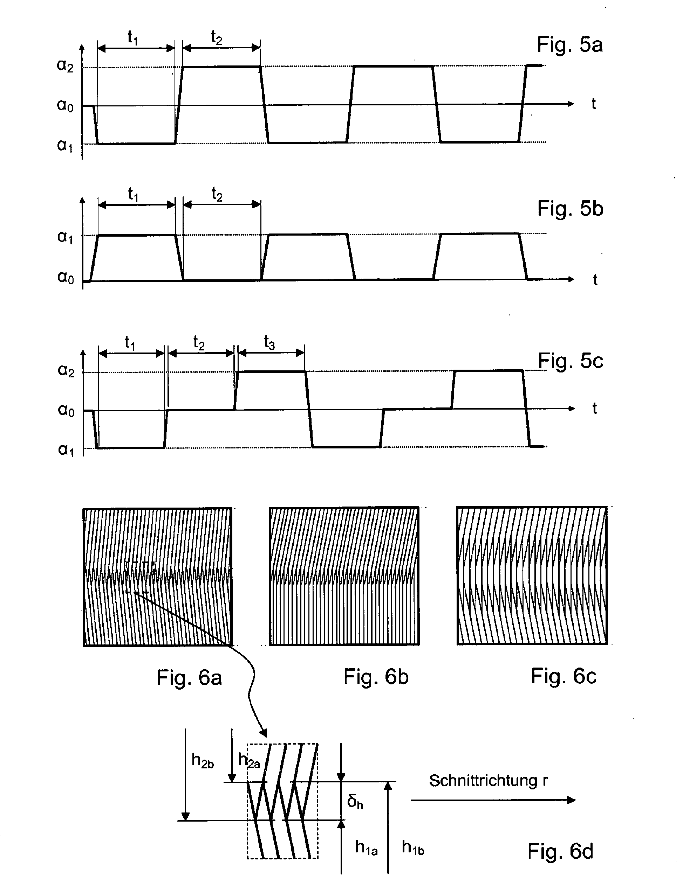

Die Figuren 5a bis 5c zeigen den Verlauf der Winkellage zur vertikalen Drahtlaufrichtung bzw. der Neigungswinkel des Drahtes in Bezug zur vertikalen Drahtlaufrichtung α₀ in Funktion der Zeit bei Einstellung einer Drahtneigungssequenz gemäss Figur 4a bis 4c. Figur 5a betrifft, wie schon in Zusammenhang mit Figur 4a erwähnt eine Drahtneigungssequenz bei der während der Bearbeitung eines Konturabschnittes abwechslungsweise zwei unterschiedliche bestimmte Winkellagen A₁ und A₂ eingestellt werden. Jede bestimmte Winkellage wird während einer bestimmten zugeordneten Zeitdauer (t₁, t₂) eingestellt und das Werkstück wird in der jeweiligen bestimmten Winkellage bearbeitet. Die Winkellage A₁ wird mit dem Neigungswinkel α₁ (hier negativ) während einer Zeitdauer t₁ eingestellt. In der Bearbeitungspause zwischen t₁ und t₂ wird der Draht von einem Neigungswinkel α₁ zu einem Neigungswinkel α₂ gebracht. Die zweite Winkellage A₂ wird während einer Zeitdauer t₂ gehalten. Anschliessend wiederholt sich der Prozess indem wieder die Winkellage A₁ eingestellt wird, usw.

Die Zeitdauer, während der eine bestimmte Winkellage eingestellt ist, hängt von mehreren Faktoren ab. Bei FW-Maschinen ist die Länge des Drahtvorrats begrenzt und die Drahtlaufgeschwindigkeit relativ hoch. Bei FW-Maschinen mit reversierender Drahtlaufrichtung entspricht die Zeitdauer, während der eine bestimmte Winkellage eingestellt wird, vorzugsweise der Zeitdauer zwischen zwei Umkehrungen der Drahtlaufrichtung. Bei Maschinen mit sehr grossem Drahtvorrat (z.B. mehrere Kilometer) ist die Zeitdauer, während der eine bestimmte Winkellage eingestellt wird, vorzugsweise vorgegeben oder aufgrund der Schnittrate bestimmt bzw. berechnet.

Vorzugsweise ist jede Zeitdauer (t₁, t₂, t₃, ...) für jede Winkellage in Hinblick auf eine maximale Schnittleistung optimiert. Hierbei werden vorzugsweise zumindest die Prozesspause zur Umstellung der Winkellage und die jeweilige Schnittleistung bei jeder bestimmten Winkellage berücksichtigt.

Vorzugsweise ist jede Zeitdauer (t₁, t₂, t₃, ...) gleich lang, so dass der Bearbeitungsanteil und die durchschnittliche effektive Schnitthöhe bei jeder Winkellage im Wesentlichen gleich gross ist.

Die Anteile der Bearbeitung in den mindestens zwei unterschiedlichen bestimmten Winkellagen müssen jedoch nicht unbedingt gleich sein. Beispielsweise kann der Draht über 3/5 der Zeit in eine erste bestimmte Winkellage in Schnittrichtung geneigt sein, und über 2/5 der Zeit in eine zweite bestimmte Winkellage in Schnittrichtung geneigt sein. Dies kann u.a. dort vorteilhaft sein, wo die Schnittleistung bei den zwei unterschiedlichen bestimmten Winkellagen unterschiedlich ist, beispielsweise wenn inhomogene Schnittbedingungen über die Werkstückhöhe vorliegen.

Die Figuren 6a bis 6c zeigen jeweils eine Darstellung der Schnittebene eines Werkstücks bei der Einstellung der Winkellage des Drahtes gemäss den Figuren 4a bis 4c. Das erkennbare Muster zeigt die Bereiche über welche eine bestimmte Winkellage eingestellt wurde. In den Figuren 6a und 6b sind zwei unterschiedliche Winkellagen und einen Übergangsbereich zu erkennen. Figur 6c zeigt drei unterschiedliche Winkellagen und zwei Übergangsbereiche. In den Figuren 6a bis 6c ist auch die sich über die Zeitdauer (t₁, t₂, t₃, ...) verändernde Eingriffshöhe am Werkstück erkennbar, d.h. die effektive Schnitthöhe am Werkstück bei der jeweiligen Winkellage.

Figur 6d zeigt eine Vergrösserung eines Fensters aus Figur 6a. Die effektive Schnitthöhe ist am Anfang einer Teilperiode am kleinsten (h₁ₐ, h₂ₐ) und nimmt stetig zu, bis an das Ende des Teilperiode (h_{1b}, h_{2b}). Bei der abwechslungsweisen Einstellung von zwei unterschiedlichen bestimmten Winkellagen ist die durchschnittliche effektive Schnitthöhe am Werkstück gleich der halben Summe von h_{1b} und h_{2b}. Die Differenz δₕ zwischen der minimalen und der maximalen Eingriffshöhe am Werkstück ist durch die Zeitdauer während der eine bestimmte Winkellage eingestellt wird, durch Betrag und Richtung der Winkellagen und durch die Schnittrate gegeben. δₕ soll vorzugsweise nicht zu gross sein, damit die Bearbeitungsbedingungen über eine Zeitdauer, während der eine bestimmte Winkellage eingestellt wird, nicht stark ändern. Eine geeignete Winkellage kann somit beispielsweise aufgrund der zu erwartenden Schnittrate und einer zulässigen Differenz δₕ abgeleitet und eingestellt werden.

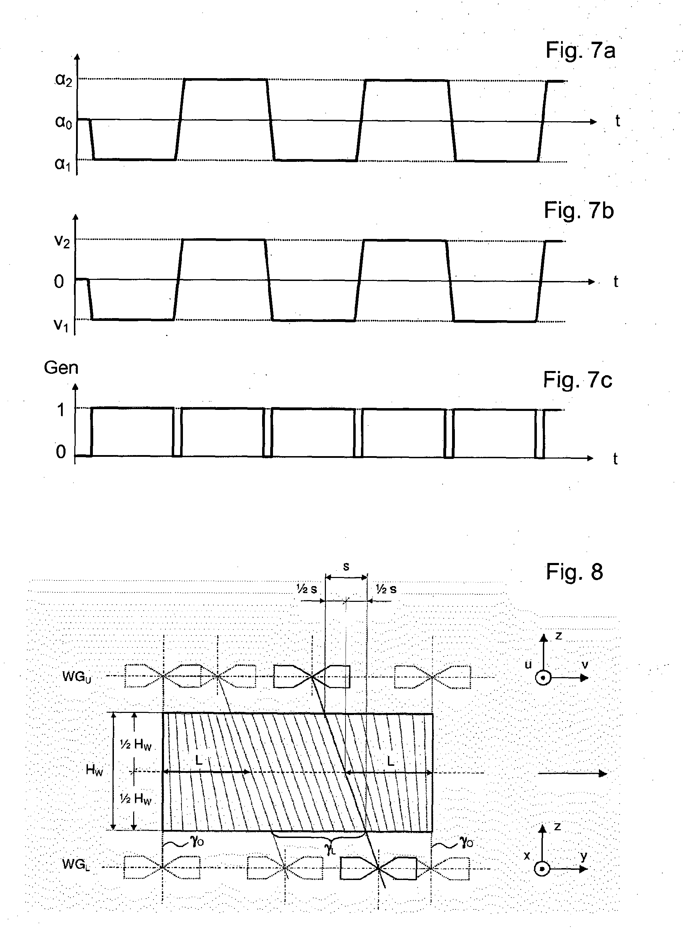

Die Figur 7b zeigt den Verlauf der Drahtlaufgeschwindigkeit über die Zeit bei einer Maschine mit reversierender Drahtlaufrichtung, zum Beispiel einer FW-Maschine. Die Drahtlaufgeschwindigkeit ist am Anfang null; dann wird die Drahtlaufgeschwindigkeit v₁ eingestellt und während einer ersten Zeitdauer gehalten; anschliessend wird die Drahtlaufrichtung umgeschaltet und es wird während einer zweiten Zeitdauer die Drahtlaufgeschwindigkeit v₂ eingestellt. Die zwei Drahtlaufrichtungen werden abwechselnd eingestellt. Figur 7c zeigt die Zuschaltung eines Impulsgenerators in Funktion der Zeit, bzw die Abschaltung während einer Prozesspause.
Die Figur 7a zeigt eine grafische Darstellung der Winkellage bzw. des Neigungswinkels in Funktion der Zeit; Figur 7a entspricht der voran beschriebenen Figur 5a. Die Änderung der Winkellage wird vorzugsweise simultan mit der Umschaltung der Drahtlaufrichtung durchgeführt, da die Bearbeitung während der Umschaltung ohnehin angehalten wird.

Das Steuerprogramm kann vorzugsweise selbsttätig feststellen, ob das erfindungsgemässe Drahtschneideverfahren vorteilhaft anwendbar ist. Hierzu werden die zu erwartenden Schnittraten bei Anwendung für das Erfindungsgemässe Schneidverfahren mit den Schnittraten für traditionelle Schneidverfahren verglichen. Die zu erwartenden Schnittraten sind beispielsweise in Funktion des Werkstoffes und/oder der Werkstückhöhe beispielsweise in Form von Tabellen in einem Speicher der Maschinensteuerung abgelegt. Nebst den Schnittraten sind auch andere Vergleichskriterien, zum Beispiel Zielgrössen wie Oberflächengüte, Konturgenauigkeit, usw. abgelegt.

Vorzugsweise wird das erfindungsgemässe Drahtschneideverfahren mit einem Mehrdrahtsystem kombiniert, beispielsweise mit einem Mehrdrahtsystem bei dem ein Draht mehrfach umgelenkt und geführt wird, derart dass zwei oder mehr Drahtabschnitte desselben Drahtes parallel an das Werkstück herangeführt werden und dass das Werkstück gleichzeitig an mehreren Stellen bearbeitet wird, oder in einem weiteren Beispiel mit einem Mehrdrahtsystem, bei welchem mehrere unabhängige Drähte parallel an das Werkstück herangeführt werden und dass das Werkstück gleichzeitig an mehreren Stellen bearbeitet wird.

Die Erfindung ist vorzugsweise für den sog. Vollschnitt (auch Hauptschnitt) geeignet. Besonders geeignet ist das Verfahren für einfaches Trennen mit einer bestimmten Schnittrichtung.
Die Erfindung ist insbesondere bei grosser Werkstückhöhe vorteilhaft einsetzbar; bei WEDM ist insbesondere ab rund 150mm eine interessante Erhöhung der Schnittrate zu erwarten. Bei speziellen Werkstoffen mit schlechter Leitfähigkeit (Halbleiter, Quarz, Keramik, usw.) ist bereits bei kleinerer Werkstückhöhe eine Erhöhung der Schnittrate möglich.

## Patentansprüche

1. Verfahren für das Schneiden eines Werkstückes (2) mittels eines ablaufenden Drahtes (1), wobei der Draht (1) und/oder das Werkstück (2) relativ zueinander abwechselnd in mindestens zwei unterschiedliche bestimmte Winkellagen in Schnittrichtung (r) geneigt werden, **dadurch gekennzeichnet, dass** durch die unterschiedlichen bestimmten Winkellagen die effektive Schnitthöhe (s) am Werkstück (2) kleiner als die gesamte Werkstückhöhe (h) wird, wobei zur Umstellung der bestimmten Winkellagen eine Prozesspause eingeführt wird während welcher kein Materialabtrag stattfindet.

2. Verfahren nach Anspruch 1, **dadurch gekennzeichnet, dass** jede bestimmte Winkellage in Schnittrichtung (r) während einer bestimmten zugeordneten Zeitdauer (t₁, t₂, t₃) eingestellt wird, und dass das Werkstück (2) in der jeweiligen Winkellage bearbeitet wird.

3. Verfahren nach Anspruch 2, **dadurch gekennzeichnet, dass** die Zeitdauer für jede bestimmte Winkellage in Schnittrichtung (r) in Hinblick auf eine maximale Schnittleistung optimiert wird.

4. Verfahren nach einem der vorangehenden Ansprüche, **dadurch gekennzeichnet, dass** zur Einstellung der mindestens zwei unterschiedlichen bestimmten Winkellagen in Schnittrichtung (r) eine untere Drahtführung (3) und/oder eine oberen Drahtführung (4) relativ zueinander in Schnittrichtung verschoben wird/werden.

5. Verfahren nach einem der vorangehenden Ansprüche, **dadurch gekennzeichnet, dass** zur Einstellung der mindestens zwei unterschiedlichen bestimmten Winkellagen in Schnittrichtung (r), das Werkstück (2) um eine Achse normal zu der durch Drahtlaufrichtung und Schnittrichtung definierten Ebene verschwenkt wird.

6. Verfahren nach einem der vorangehenden Ansprüche, **dadurch gekennzeichnet, dass** die eine der mindestens zwei unterschiedlichen bestimmten Winkellagen in Schnittrichtung (r) die senkrechte Drahtlaufrichtung ist.

7. Verfahren nach einem der vorangehenden Ansprüche, **dadurch gekennzeichnet, dass** der Draht (1) und/oder das Werkstück (2) abwechselnd in zwei unterschiedliche bestimmte Winkellagen relativ zueinander in Schnittrichtung (r) geneigt werden, wobei der Betrag des Neigungswinkels der beiden bestimmten Winkellagen gleich ist und die Neigungsrichtungen entgegengesetzt sind.

8. Verfahren nach einem der vorangehenden Ansprüche, **dadurch gekennzeichnet, dass** die Drahtlaufrichtung (I) des Drahtes abwechselnd umgekehrt wird und dass die relative Winkellage des Drahtes zum Werkstück während der Umkehrung der Drahtlaufrichtung (I) verändert wird.

9. Verfahren nach einem der vorangehenden Ansprüche, **dadurch gekennzeichnet, dass** die Drahtlaufrichtung (I) und die relative Winkellage des Drahtes in Schnittrichtung (r) so aufeinander abgestimmt sind, dass der Draht bei Eintritt in den Schnittspalt unmittelbar auf den zu bearbeitenden Schnittbereich des Werkstücks trifft.

10. Verfahren nach einem der vorangehenden Ansprüche, **dadurch gekennzeichnet, dass** eine Endposition des Werkstücks (2) und/oder des Drahtes (1) vor einer Pause zur Umkehrung der relativen Winkellage des Drahtes (1) zum Werkstück (2) im Hinblick auf die folgende Bearbeitung bei derselben relativen Winkellage gespeichert wird.

11. Verfahren nach Anspruch 10, **dadurch gekennzeichnet, dass** eine Zielposition des Werkstücks (2) und/oder des Drahtes (1) zur Wiederaufnahme der Bearbeitung nach einer Pause zur Umstellung der relativen Winkellage des Drahtes (1) zum Werkstück (2) durch die gespeicherte Endposition des Werkstücks und/oder des Drahtes (1) in einer vorangehenden Bearbeitungsphase bei der selben relativen Winkellage bestimmt wird.

12. Verfahren nach Anspruch 11, **dadurch gekennzeichnet, dass** eine Anfahrposition bestimmt wird, welche gegenüber der Zielposition zur Wiederaufnahme der Bearbeitung um einen bestimmten Betrag, insbesondere 5 bis 500µm, in Schnittrichtung (r) zurückversetzt ist.

13. Verfahren nach Anspruch 12, **dadurch gekennzeichnet, dass** die Umkehrung der relativen Winkellage des Drahtes (1) zum Werkstück (2) bis zur Anfahrposition bei maximaler Positionierungsgeschwindigkeit erfolgt und dass die Position zur Wiederaufnahme der Bearbeitung mit prozessgesteuerter Geschwindigkeit erfolgt.

14. Verfahren einem der vorangehenden Ansprüche, **dadurch gekennzeichnet, dass** der Draht (1) mehrfach umgelenkt und geführt wird, derart dass zwei oder mehr Drahtabschnitte parallel zueinander an das Werkstück (2) herangeführt werden und dass das Werkstück (2) gleichzeitig an mehreren Stellen bearbeitet wird.

15. Verfahren einem der vorangehenden Ansprüche, **dadurch gekennzeichnet, dass** mehrere Drähte parallel zueinander an das Werkstück (2) herangeführt werden und dass das Werkstück (2) gleichzeitig an mehreren Stellen bearbeitet wird.

16. Verfahren nach einem der vorangehenden Ansprüche, **dadurch gekennzeichnet, dass** der Materialabtrag funkenerosiv-, elektrochemisch- und/oder abrasiv erfolgt.

## Claims

1. Method for cutting a workpiece (2) by means of a running-off wire (1), wherein the wire (1) and/or the workpiece (2) are alternately inclined in relation to one another into at least two different specific angular positions in the cutting direction (r), **characterized in that**, as a result of the different specific angular positions, the effective cutting height (s) on the workpiece (2) becomes smaller than the entire workpiece height (h), a process intermission, during which no material removal takes place, being introduced for the purpose of changing over the specific angular positions.

2. Method according to Claim 1, **characterized in that** each specific angular position in the cutting direction (r) is set for a specific assigned time duration (t₁, t₂, t₃), and **in that** the workpiece (2) is machined in the respective angular position.

3. Method according to Claim 2, **characterized in that** the time duration for each specific angular position in the cutting direction (r) is optimized with a view to maximum cutting performance.

4. Method according to one of the preceding claims, **characterized in that**, for setting the at least two different specific angular positions in the cutting direction (r), a lower wire guide (3) and/or an upper wire guide (4) are/is displaced in relation to one another in the cutting direction.

5. Method according to one of the preceding claims, **characterized in that**, for setting the at least two different specific angular positions in the cutting direction (r), the workpiece (2) is pivoted about an axis perpendicularly to the plane defined by the wire running direction and cutting direction.

6. Method according to one of the preceding claims, **characterized in that** one of the at least two different specific angular positions in the cutting direction (r) is the vertical wire running direction.

7. Method according to one of the preceding claims, **characterized in that** the wire (1) and/or the workpiece (2) are/is inclined alternately into two different specific angular positions in relation to one another in the cutting direction (r), the amount of the angle of inclination of the two specific angular positions being identical and the directions of inclination being opposed.

8. Method according to one of the preceding claims, **characterized in that** the wire running direction (1) of the wire is reversed alternately, and **in that** the relative angular position of the wire with respect to the workpiece is varied during the reversal of the wire running direction (1).

9. Method according to one of the preceding claims, **characterized in that** the wire running direction (1) and the relative angular position of the wire in the cutting direction (r) are coordinated with one another such that the wire, when it enters the cutting gap, impinges immediately onto the workpiece cutting region to be machined.

10. Method according to one of the preceding claims, **characterized in that** an end position of the workpiece (2) and/or of the wire (1) is stored, before an intermission for reversing the relative angular position of the wire (1) with respect to the workpiece (2), with a view to subsequent machining in the same relative angular position.

11. Method according to Claim 10, **characterized in that** a target position of the workpiece (2) and/or of the wire (1) for resuming machining after an intermission for changing over the relative angular position of the wire (1) with respect to the workpiece (2) is determined by the stored end position of the workpiece and/or of the wire (1) during a preceding machining phase in the same relative angular position.

12. Method according to Claim 11, **characterized in that** an approach position is determined which is set back by a specific amount, in particular 5 to 500 µm, in the cutting direction (r) with respect to the target position for resuming machining.

13. Method according to Claim 12, **characterized in that** the reversal in the relative angular position of the wire (1) with respect to the workpiece (2) takes place at maximum positioning speed up to the approach position, and **in that** the position for resuming machining is obtained at process-controlled speed.

14. Method according to one of the preceding claims, **characterized in that** the wire (1) is deflected and guided in a multiple manner in such a way that two or more wire portions are led up to the workpiece (2) parallel to one another, and **in that** the workpiece (2) is machined simultaneously at a plurality of locations.

15. Method according to one of the preceding claims, **characterized in that** a plurality of wires are led up to the workpiece (2) parallel to one another, and **in that** the workpiece (2) is machined simultaneously at a plurality of locations.

16. Method according to one of the preceding claims, **characterized in that** material removal takes place spark-erosively, electrochemically and/or abrasively.

## Revendications

1. Procédé pour couper une pièce (2) au moyen d'un fil en défilement (1), dans lequel le fil (1) et/ou la pièce (2) sont inclinés l'un par rapport à l'autre alternativement dans au moins deux positions angulaires déterminées différentes dans la direction de coupe (r), **caractérisé en ce qu'**en raison des positions angulaires déterminées différentes la hauteur de coupe effective (s) sur la pièce (2) est plus petite que la hauteur totale (h) de la pièce, dans lequel on introduit une pause du processus, pendant laquelle il ne se produit aucun enlèvement de matière, pour l'inversion des positions angulaires déterminées.

2. Procédé selon la revendication 1, **caractérisé en ce que** chaque position angulaire déterminée est réglée dans la direction de coupe (r) pendant une durée associée déterminée (t₁, t₂, t₃), et **en ce que** la pièce (2) est usinée dans la position angulaire respective.

3. Procédé selon la revendication 2, **caractérisé en ce que** la durée pour chaque position angulaire déterminée dans la direction de coupe (r) est optimisée dans l'optique d'une puissance de coupe maximale.

4. Procédé selon l'une quelconque des revendications précédentes, **caractérisé en ce que**, pour le réglage des au moins deux positions angulaires déterminées différentes dans la direction de coupe (r), un guide-fil inférieur (3) et/ou un guide-fil supérieur (4) est/sont déplacé(s) l'un par rapport à l'autre dans la direction de coupe.

5. Procédé selon l'une quelconque des revendications précédentes, **caractérisé en ce que**, pour le réglage des au moins deux positions angulaires déterminées différentes dans la direction de coupe (r), la pièce (2) est basculée autour d'un axe normal au plan défini par la direction de défilement du fil et la direction de coupe.

6. Procédé selon l'une quelconque des revendications précédentes, **caractérisé en ce qu'**une première des au moins deux positions angulaires déterminées différentes dans la direction de coupe (r) est la direction verticale de défilement du fil.

7. Procédé selon l'une quelconque des revendications précédentes, **caractérisé en ce que** le fil (1) et/ou la pièce (2) sont inclinés l'un par rapport à l'autre dans la direction de coupe (r) alternativement dans deux positions angulaires déterminées différentes, dans lequel la valeur de l'angle d'inclinaison des deux positions angulaires déterminées est égal et les directions d'inclinaison sont opposées.

8. Procédé selon l'une quelconque des revendications précédentes, **caractérisé en ce que** la direction de défilement du fil (1) du fil est inversée en alternance et **en ce que** la position angulaire relative du fil par rapport à la pièce est modifiée pendant l'inversion de la direction de défilement du fil (1).

9. Procédé selon l'une quelconque des revendications précédentes, **caractérisé en ce que** la direction de défilement du fil (1) et la position angulaire relative du fil dans la direction de coupe (r) sont accordées l'une à l'autre, de telle manière que, lors de son entrée dans la fente de coupe, le fil arrive directement sur la région de coupe à usiner de la pièce.

10. Procédé selon l'une quelconque des revendications précédentes, **caractérisé en ce qu'**une position d'extrémité de la pièce (2) et/ou du fil (1) avant une pause pour l'inversion de la position angulaire relative du fil (1) par rapport à la pièce (2) est mémorisée dans l'optique de l'usinage suivant dans la même position angulaire relative.

11. Procédé selon la revendication 10, **caractérisé en ce que** l'on détermine une position cible de la pièce (2) et/ou du fil (1) pour la reprise de l'usinage après une pause pour l'inversion de la position angulaire relative du fil (1) par rapport à la pièce (2) par la position d'extrémité mémorisée de la pièce et/ou du fil (1) dans une phase d'usinage antérieure dans la même position angulaire relative.

12. Procédé selon la revendication 11, **caractérisé en ce que** l'on détermine une position de départ, qui est reculée dans la direction de coupe (r) d'une valeur déterminée, en particulier de 5 à 500 µm, par rapport à la position cible pour la reprise de l'usinage.

13. Procédé selon la revendication 12, **caractérisé en ce que** l'inversion de la position angulaire relative du fil (1) par rapport à la pièce (2) jusqu'à la position de départ est effectuée avec une vitesse de positionnement maximale et **en ce que** la position pour la reprise de l'usinage est effectuée avec une vitesse commandée par le processus.

14. Procédé selon l'une quelconque des revendications précédentes, **caractérisé en ce que** le fil (1) est dévié et guidé plusieurs fois, de telle manière que deux ou plus de deux tronçons de fil soient amenés à la pièce (2) parallèlement l'un à l'autre et **en ce que** la pièce (2) est usinée simultanément en plusieurs endroits.

15. Procédé selon l'une quelconque des revendications précédentes, **caractérisé en ce que** plusieurs fils sont amenés à la pièce (2) parallèlement l'un à l'autre et **en ce que** la pièce (2) est usinée simultanément en plusieurs endroits.

16. Procédé selon l'une quelconque des revendications précédentes, **caractérisé en ce que** l'enlèvement de matière est effectué par usinage électroérosif, électrochimique et/ou abrasif.
